# FASCICULE DE BREVET EUROPEEN

(11) **EP 2 683 636 B1**
(45) Date de publication et mention de la délivrance du brevet: **02.08.2017**
(21) Numéro de dépôt: 12710349.7
(22) Date de dépôt: 05.03.2012
(51) Int. Cl.: B65H 19/18, B29C 65/08, B29C 65/74, B29C 65/00, B29C 65/78

(54) **DISPOSITIF DE RABOUTAGE A MOYENS DE LAMINAGE**
STUMPFVERBINDUNGSVORRICHTUNG MIT WALZVORRICHTUNG
BUTT-JOINING DEVICE COMPRISING ROLLING MEANS

(30) Priorité: 07.03.2011 FR 1151806
(43) Date de publication de la demande: 15.01.2014
(73) Titulaire: Abate, Pietro, 42000 Saint Etienne (FR)
(72) Inventeur: Abate, Pietro, 42000 Saint Etienne (FR)
(74) Mandataire: Cabinet Poncet
(86) Numéro de dépôt international: PCT/IB2012/051022
(87) Numéro de publication internationale: WO 2012/120436

(56) Documents cités:
- FR-A- 1 516 183
- US-A- 3 384 527
- US-A- 3 796 625
- US-B1- 6 402 868

## Description

### DOMAINE TECHNIQUE DE L'INVENTION

La présente invention concerne un dispositif de raboutage d'un produit en bande ou en nappe de matière. Un tel dispositif est utilisé pour joindre bout à bout deux bandes ou nappes successives de produit : l'extrémité initiale d'une deuxième bande ou nappe de produit est rendue solidaire de l'extrémité finale d'une première bande ou nappe de produit qui a été utilisée dans sa quasi-totalité. Lesdites première et deuxième bandes ou nappes de produit sont généralement enroulées sur des bobines de dévidage.

De façon connue dans le document US 3 384 527 A, un dispositif de raboutage d'un produit en nappe ou en bande de matière comprend :
- une station de travail de soudure et de coupe, apte à souder et découper par échauffement au moyen de résistances électriques deux épaisseurs de produit selon une zone de soudure et de découpe,
- une station de travail de laminage à moyens de laminage par échauffement au moyen de résistances électriques de la zone de soudure et de découpe,
entre lesquelles est destiné à être déplacé ledit produit en bande ou en nappe de matière selon un déplacement défini par des moyens de retenue du produit en amont de la station de travail de laminage et par des moyens de traction du produit en aval de la station de travail de laminage.

Un tel dispositif est généralement utilisé pour le raboutage de produits soudables par ultrasons, tels que des non tissés, des films plastiques ou encore des tissus comprenant de la matière thermofusible.

Dans ce dispositif de raboutage connu, après exécution des opérations de soudure et de coupe, le produit est déplacé manuellement par un opérateur vers la station de travail de laminage afin de placer la zone de soudure et de découpe à laminer en correspondance des moyens de laminage.

Les opérations nécessaires d'ajustement manuel de position effectuées par un opérateur impliquent des temps d'arrêt relativement importants de la machine traitant le produit en bande ou en nappe de matière, induisant une perte importante de productivité. Il est en effet parfois possible que l'opération de raboutage prenne plus de temps que le dévidage et traitement complet d'une bobine de produit.

L'intervention manuelle de l'opérateur doit en outre être effectuée en engageant ses mains et bras dans le dispositif de raboutage et dans la machine qui traite le produit comprenant ledit dispositif de raboutage, ce qui induit des risques pour la sécurité de l'opérateur.

Si l'intervention manuelle d'un opérateur habile permet de tenir compte de certains paramètres tels que l'élongation du produit par déformation élastique lors de son déroulement, il n'en demeure pas moins que l'opération manuelle de positionnement de la zone de soudure et de découpe en correspondance des moyens de laminage reste approximative, notamment pour des produits en bande ou en nappe de matière de très grande largeur pour lesquels un opérateur a du mal à placer la zone de soudure et de découpe rectiligne selon un parallélisme convenable vis-à-vis du trajet également rectiligne des moyens de laminage.

Si l'on cherche à déplacer le produit en bande par des moyens mécaniques de retenue et de traction, alors la position de la zone de soudure et de découpe dépend de l'étirement du produit sous l'effet de sa traction, et un décalage peut donc se produire par rapport à la station de travail de laminage si les caractéristiques mécaniques du produit varient.

Il en résulte que la zone de soudure et de découpe à laminer est souvent placée de façon insatisfaisante vis-à-vis des moyens de laminage, ce qui peut entraîner le laminage intempestif de parties du produit à simple épaisseur qui seront ainsi affaiblies, et ce qui peut entraîner à l'inverse l'absence de laminage de parties de la zone de soudure et de découpe à laminer qui présente alors, suite aux opérations de soudure et de découpe, une cohérence fragile et précaire. Ces imperfections peuvent induire un déchirement partiel ou complet du produit lorsque celui-ci sera déplacé sous tension vers une station de travail ultérieur.

### EXPOSE DE L'INVENTION

Le problème proposé par l'invention est de rendre possible et efficace une mécanisation des opérations de raboutage d'un produit en bande ou en nappe de matière, en réduisant l'influence des variations des caractéristiques mécaniques du produit telles que son élasticité, de façon à limiter les interventions manuelles d'un opérateur et la dextérité requise pour ce dernier, et de façon à améliorer la productivité et la sécurité des opérateurs.

Pour atteindre ces objets, ainsi que d'autres, l'invention propose un dispositif de raboutage d'un produit en bande ou en nappe de matière, comprenant :
- une station de travail de soudure et de coupe, apte à souder par échauffement et découper deux épaisseurs de produit selon une zone de soudure et de découpe,
- une station de travail de laminage à moyens de laminage par échauffement de la zone de soudure et de découpe,
entre lesquelles est destiné à être déplacé ledit produit en bande ou en nappe de matière selon un déplacement défini par des moyens de retenue du produit en amont de la station de travail de laminage et par des moyens de traction du produit en aval de station de travail de laminage ;
selon l'invention, dans la station de travail de soudure et de coupe et dans la station de travail de laminage, l'échauffement est réalisé par ultrasons, et le dispositif de raboutage comprend des moyens d'ajustement de la position relative des moyens de laminage et de la zone de soudure et de découpe à laminer, de telle sorte que, après soudure et coupe et après déplacement de la zone de soudure et de découpe vers la station de travail de laminage, la zone de soudure et de découpe à laminer est placée en correspondance des moyens de laminage.

Les moyens d'ajustement permettent un réglage efficace de la position relative des moyens de laminage et de la zone de soudure et de découpe à laminer pendant l'opération de laminage lorsque le déplacement du produit est assuré par des moyens mécaniques de retenue et de traction, de sorte que ladite position relative est indépendante des caractéristiques mécaniques du produit telles que son élasticité qui varient d'un produit à l'autre en fonction par exemple de l'épaisseur et de la nature des matériaux le composant.

L'échauffement par ultrasons concentre l'échauffement dans le seul matériau du produit en bande ou en nappe, et dans la seule zone à souder, à couper ou à laminer. Il en résulte une meilleure précision du travail, et une meilleure reproductibilité.

En outre, dans le cas de moyens mécaniques de retenue et de traction du produit, les conditions de déplacement du produit sont généralement constantes pour une série de bobines successives d'un même produit.

Il est alors possible d'effectuer un premier réglage de la position relative des moyens de laminage par rapport à la zone de soudure et de découpe à laminer lors du raboutage entre les deux premières bobines. Le réglage, après avoir été effectué, peut être conservé pour toutes les opérations de raboutage ultérieures destinées à être effectuées sur le même produit en bande ou en nappe de matière, avec une qualité convenable et reproductible.

L'intervention manuelle d'un opérateur n'est donc plus nécessaire que pour un premier réglage, aucune opération manuelle d'ajustement de la position relative des moyens de laminage et de la zone de soudure et de découpe à laminer n'étant par la suite nécessaire.

Selon un premier mode de réalisation de l'invention, on peut prévoir que :
- les moyens d'ajustement comprennent des moyens de déplacement relatif des station de travail de laminage et station de travail de soudure et de coupe,
- les moyens d'ajustement comprennent des moyens de verrouillage adaptés pour fixer la station de travail de laminage et la station de travail de soudure et de coupe à différentes distances d'écartement relatif.

Le réglage de la distance d'écartement relatif entre la station de travail de soudure et de coupe et la station de travail de laminage permet de rendre égales les longueurs suivantes : d'une part la longueur du chemin parcouru par le produit entre les moyens de retenue et la station de travail de soudure et de coupe avant l'avance sous traction, et d'autre part la longueur du chemin parcouru par le produit entre les moyens de retenue et la station de travail de laminage après l'avance sous traction.

Selon un deuxième mode de réalisation de l'invention, on peut prévoir, en alternative ou en complément du premier mode de réalisation de l'invention, que :
- les moyens d'ajustement comprennent une première barre de renvoi de produit, située entre les moyens de retenue et la station de travail de soudure et de coupe et s'allongeant selon une première direction d'allongement perpendiculaire à la direction d'avance du produit,
- les moyens d'ajustement comprennent des premiers moyens de déplacement transversal de la première barre de renvoi, aptes à déplacer la première barre de renvoi de façon à ajuster la longueur du tronçon amont de produit s'étendant depuis les moyens de retenue jusqu'à la station de travail de soudure et de coupe.

En déplaçant la première barre de renvoi de produit, on allonge ou on raccourcit la longueur du tronçon amont de produit s'étendant depuis les moyens de retenue jusqu'à la station de travail de soudure et de coupe de façon à ce que cette longueur corresponde exactement à la longueur de produit qui s'étendra depuis les moyens de retenue jusqu'à la station de travail de laminage une fois que la zone de soudure et de découpe aura été déplacée jusqu'à ladite station de travail de laminage.

Avantageusement, le dispositif peut comprendre des moyens de retenue du produit en amont de la station de travail de soudure et de coupe, aptes à bloquer un tronçon amont de produit s'étendant depuis les moyens de retenue jusqu'à la station de travail de soudure et de coupe.

Les moyens de retenue peuvent comporter de préférence :
- une troisième barre de renvoi de produit,
- des moyens de pincement, déplaçables sélectivement entre une position de retenue dans laquelle les moyens de pincement viennent en appui sur la troisième barre de renvoi de produit par l'intermédiaire du produit, et une position de libération dans laquelle les moyens de pincement sont à l'écart de la troisième barre de renvoi.

De tels moyens de pincement sont simples à réaliser et faciles à automatiser pour un blocage fiable et efficace du produit. De préférence, les moyens de pincement sont placés au plus près de la station de travail de soudure et de coupe, ce qui signifie que la troisième barre de renvoi de produit est de préférence la barre de renvoi placée immédiatement avant la station de travail de soudure et de coupe sur le trajet du produit. Une telle disposition permet de limiter la longueur du tronçon amont de produit s'étendant depuis les moyens de retenue jusqu'à la station de travail de soudure et de coupe, ce qui réduit les risques de dérive par allongement élastique de ce tronçon amont.

En alternative à l'utilisation de moyens de pincement, il est envisageable d'utiliser tous moyens appropriés de blocage du déroulement du produit en bande ou en nappe de matière, en immobilisant par exemple la bobine de dévidage sur laquelle ledit produit en bande ou en nappe de matière est généralement enroulé.

Avantageusement, on peut prévoir que :
- la station de travail de laminage comprend une contrepartie de laminage, s'étendant selon une troisième direction d'allongement, et ayant une face de travail sensiblement plane,
- les moyens de laminage sont solidaires d'un support déplaçable selon la troisième direction d'allongement en vis-à-vis de la contrepartie de laminage,
- les moyens de laminage sont solidaires de moyens d'appui conformés pour venir en appui contre la face de travail de la contrepartie de laminage,
- les moyens de laminage sont solidaires du support par l'intermédiaire de moyens de liaison conformés pour autoriser :
   - un mouvement de translation selon une direction sensiblement perpendiculaire au plan de la face de travail,
   - un mouvement de rotation autour d'une direction sensiblement parallèle à la troisième direction d'allongement.

De tels moyens de liaison et d'appui permettent un plaquage du produit contre toute la surface de la face de travail de la contrepartie de laminage, ce qui permet aux moyens de laminage de suivre les éventuelles déformations (torsions, flèches, ...) de la contrepartie de laminage pour que soit effectué un laminage régulier et homogène sur toute la largeur du produit en bande et selon toute la longueur de la zone de soudure et de découpe à laminer.

De préférence, les moyens d'appui peuvent venir, par l'intermédiaire du produit, en appui contre la face de travail de la contrepartie de laminage de part et d'autre de la zone de soudure et de découpe à laminer.

Les moyens d'appui viennent ainsi en appui sur le produit de part et d'autre de la zone de soudure et de découpe à laminer et ne touchent pas la zone de soudure et de découpe à laminer qui présente, avant laminage, une géométrie gauche et une cohérence précaire et fragile. Venir en contact directement sur la zone de soudure et de découpe à laminer qui a été géométriquement déformée par remise à plat pourrait provoquer une rupture au moins partielle de la zone de soudure et de découpe à laminer.

Avantageusement, les moyens d'appui peuvent comprendre des moyens de roulement avec deux roues situées de part et d'autre des moyens de laminage. Les moyens de roulement permettent de plaquer le produit sur la contrepartie de laminage en limitant les risques de bourrage du produit sous les moyens d'appui.

Selon une première variante, la zone de soudure et de découpe du produit peut être déplacée par traction depuis la station de travail de soudure et de coupe vers la station de travail de laminage par des moyens d'avance du produit d'une station de travail ultérieur située en aval de la station de travail de laminage.

On utilise ainsi des moyens d'avance qui sont d'ores et déjà présents dans la machine contenant le dispositif de raboutage ou dans la machine suivante à station de travail ultérieur. Cette variante est économe car elle utilise des actionneurs existants. La station de travail ultérieur peut par exemple être une station de découpe du produit selon sa largeur en une pluralité de bandes de largeur réduite avec des moyens d'enroulement pour constituer des bobines de largeur réduite.

Selon une deuxième variante, on peut prévoir que :
- le dispositif comporte des moyens d'accumulation que traverse le produit en aval de la station de travail de laminage,
- les moyens d'accumulation sont adaptés pour déplacer par traction la zone de soudure et de découpe à laminer du produit depuis la station de travail de soudure et de coupe vers la station de travail de laminage.

Le fait d'utiliser des moyens d'accumulation facilite l'automatisation de l'avance du produit car on s'affranchit alors de l'inertie généralement élevée des actionneurs existants utilisés pour une station de travail ultérieur située en aval de la station de travail de laminage.

En outre, on évite de faire travailler ladite station de travail ultérieur à une vitesse de déplacement généralement faible qui ne correspond pas à la vitesse de travail nominale de cette station de travail ultérieur et qui induirait des zones de défaut sur le produit traité.

Selon une première possibilité, le produit peut traverser les moyens d'accumulation selon un parcours en zigzag dont la longueur est ajustable.

Selon une autre possibilité, les moyens d'accumulation peuvent comprendre :
- au moins une deuxième barre de renvoi de produit, située en aval de la station de travail de laminage et s'allongeant selon une deuxième direction d'allongement perpendiculaire à la direction d'avance du produit,
- des deuxièmes moyens de déplacement transversal de la deuxième barre de renvoi de façon à ajuster la longueur du tronçon de produit situé en aval de la station de travail de laminage.

Avantageusement, les moyens de déplacement peuvent déplacer la première ou la deuxième barre de renvoi selon un mouvement de translation.

En alternative, les moyens de déplacement peuvent déplacer la première ou la deuxième barre de renvoi selon un mouvement de rotation autour d'un axe déporté parallèle à la direction d'allongement de ladite première ou deuxième barre de renvoi.

Un déplacement en rotation par pivotement de la première ou de la deuxième barre de renvoi autour d'un axe déporté et parallèle à sa direction d'allongement est plus facile à réaliser qu'un mouvement de déplacement par translation dans le cas du traitement d'un produit de grande largeur nécessitant une machine de grande largeur. En effet, déplacer transversalement une barre de grande longueur (occupant toute la largeur du produit) en translation peut présenter des risques de blocage et des pertes de parallélisme par flambage ou torsion.

Avantageusement, la station de travail de soudure et de coupe peut comprendre des moyens de coupe soudante. On améliore ainsi la compacité du dispositif de raboutage et on améliore encore la précision dans le positionnement de la zone à laminer par rapport aux moyens de laminage, la position de la zone de soudure correspondant exactement à la position de la zone de coupe.

De préférence, on peut prévoir que :
- la station de travail de soudure et de coupe comprend une contrepartie de soudure et de coupe s'étendant selon une quatrième direction d'allongement, à face de travail sensiblement plane,
- les moyens de coupe soudante comprennent une sonotrode à face affûtée.

Avantageusement, on peut prévoir que :
- la station de travail de laminage comprend une contrepartie de laminage s'étendant selon une troisième direction d'allongement, à face de travail sensiblement plane,
- les moyens de laminage comprennent une sonotrode à face sensiblement plane.

Avantageusement, le dispositif de raboutage peut comprendre des moyens de déformation de la surface de travail de la contrepartie de soudure et de coupe et/ou de la contrepartie de laminage.

On peut ainsi rectifier la géométrie de la surface de travail dans le cas où elle présenterait des déformations par flambage ou torsion de la contrepartie du fait de sa grande longueur.

En pratique, on peut avantageusement prévoir que :
- la contrepartie de soudure et de coupe et/ou la contrepartie de laminage comprend une section transversale en forme de T, la face de travail étant portée par la face externe de la barre supérieure du T,
- les moyens de déformation comprennent au moins une vis destinée à venir en appui contre la barre verticale du T, de préférence deux vis situées chacune au voisinage d'une extrémité de ladite contrepartie.

De préférence, la station de travail de soudure et de coupe et/ou la station de travail de laminage peuvent comprendre des moyens de pressage destinés à venir en appui contre la contrepartie correspondante par l'intermédiaire du produit. Les moyens de pressage permettent un maintien en position fiable du produit en vis-à-vis des moyens de soudure et de coupe et/ou des moyens de laminage lors des opérations de soudure, de coupe et/ou de laminage.

Avantageusement, on peut prévoir que la et/ou les contreparties sont déplaçables vers les moyens de pressage correspondants pour provoquer ledit appui.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 est une vue en perspective d'une machine de traitement d'un produit en bande ou en nappe de matière, comprenant un dispositif de raboutage selon l'invention ;
- la figure 2 est une vue partielle de côté du dispositif de raboutage de la machine de la figure 1 ;
- la figure 3 est une vue en perspective de la station de travail de soudure et de coupe et de la station de travail de laminage du dispositif de la figure 2 comprenant des moyens d'ajustement selon un premier mode de réalisation ;
- les figures 4 à 9 illustrent schématiquement les étapes successives de fonctionnement d'un dispositif de raboutage selon le premier mode de réalisation de l'invention ;
- la figure 10 est une vue schématique illustrant le fonctionnement d'un dispositif de raboutage selon un deuxième mode de réalisation de l'invention ;
- la figure 11 est une vue schématique d'une variante de dispositif de raboutage selon l'invention comprenant un premier type de moyens d'accumulation ;
- la figure 12 est une vue schématique d'une variante de dispositif de raboutage selon l'invention comprenant un deuxième type de moyens d'accumulation ;
- la figure 13 est une vue schématique d'une variante de dispositif de raboutage selon l'invention comprenant un troisième type de moyens d'accumulation ;
- la figure 14 est une vue de face d'une station de laminage ;
- la figure 15 est une vue de côté de la station de laminage de la figure 14 ;
- la figure 16 est une vue de face de la station de laminage de la figure 14 en cours de travail ;
- la figure 17 est une vue en perspective de la station de laminage de la figure 16 ; et
- la figure 18 est une vue partielle en perspective d'une contrepartie de soudure et de coupe et/ou d'une contrepartie de laminage.

### DESCRIPTION DES MODES DE REALISATION PREFERES

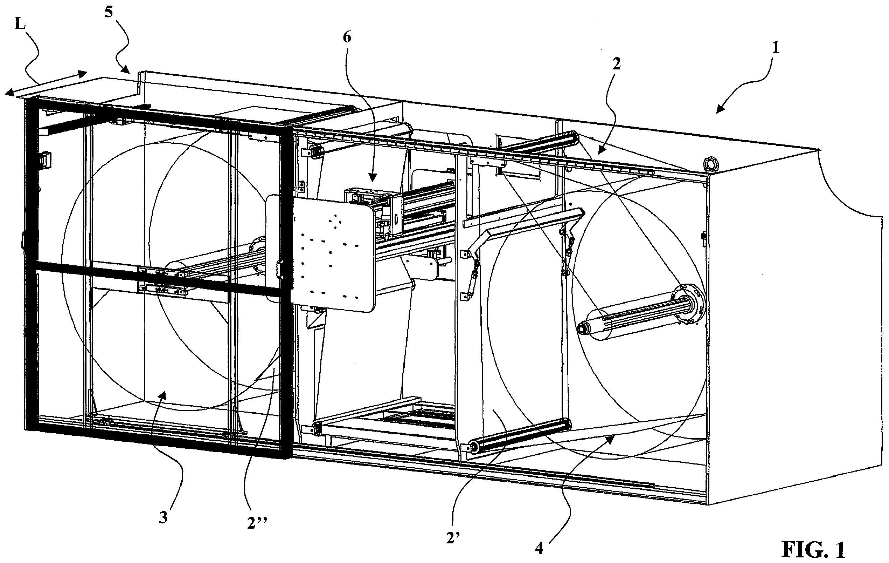

Sur la figure 1 est illustrée une machine 1 de traitement d'un produit 2 en bande ou en nappe de matière, lequel produit 2 est enroulé sur deux bobines de dévidage 3 et 4. Les bobines de dévidage 3 et 4 sont déroulées successivement au fur et à mesure de la sortie du produit 2 au niveau de la zone de sortie 5 où est généralement prévue une station de travail ultérieur telle qu'une station de découpage du produit 2 selon sa largeur L en une pluralité de bandes de largeur plus réduite.

Afin de ne pas compliquer outre mesure la description de l'invention et de faciliter la compréhension du lecteur, la station de travail ultérieur n'est pas représentée.

Une fois que le produit 2 stocké sur la bobine de dévidage 3 a été entièrement utilisé, l'extrémité initiale du produit 2 stocké sur la bobine de dévidage 4 est raboutée avec l'extrémité finale du produit 2 de la bobine de dévidage 3. Cette opération de raboutage est effectuée par le dispositif de raboutage 6 prévu dans la machine 1.

Une fois l'opération de raboutage effectuée, la bobine de dévidage 4 est déroulée pour le travail de la station de travail ultérieur, ce qui permet de remplacer en temps masqué la bobine de dévidage 3 épuisée par une nouvelle bobine de dévidage.

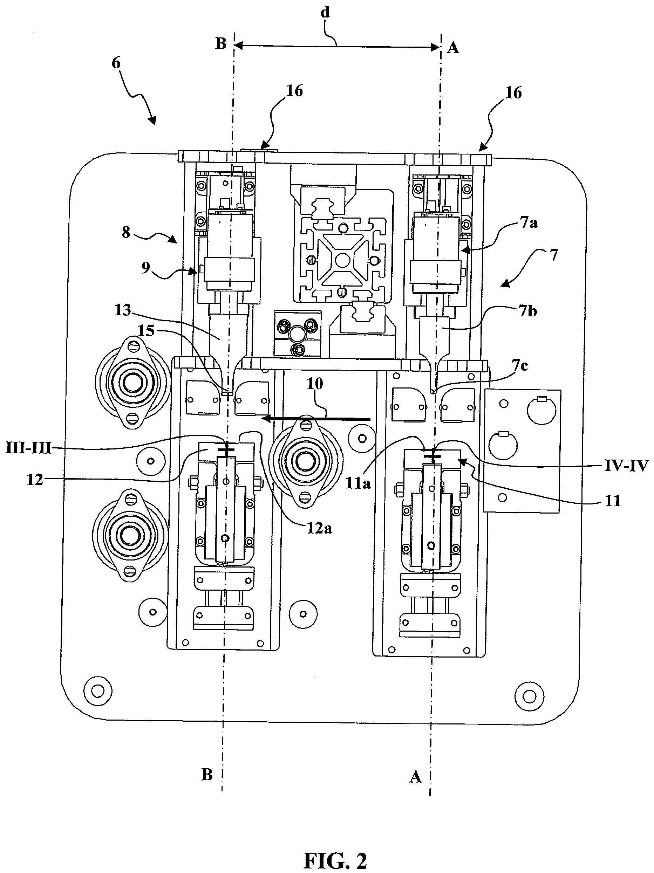

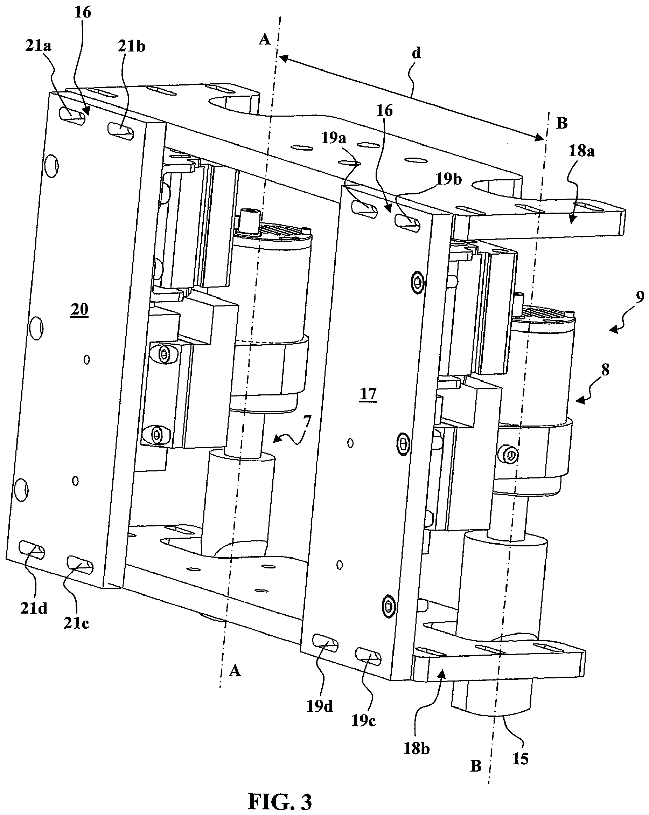

Les figures 2 et 3 illustrent un dispositif de raboutage 6 selon un premier mode de réalisation de l'invention. Ce dispositif de raboutage 6 comprend :
- une station de travail de soudure et de coupe 7, apte à souder par ultrasons et découper deux épaisseurs de produit 2 selon une zone de soudure et de découpe,
- une station de travail de laminage 8 à moyens de laminage 9 par ultrasons de la zone de soudure et de découpe,
entre lesquelles est destiné à être déplacé ledit produit 2 (non représenté) en bande ou en nappe de matière selon un mouvement illustré par la flèche 10.

De façon plus précise, la station de travail de soudure et de coupe 7 comprend des moyens de coupe soudante 7a à sonotrode 7b à face affutée 7c. La station de travail de soudure et de coupe 7 comprend également une contrepartie de soudure et de coupe 11 s'étendant selon une quatrième direction d'allongement IV-IV et à face de travail 11a sensiblement plane.

La station de travail de laminage 8 comprend une contrepartie de laminage 12 s'étendant selon une troisième direction d'allongement III-III et à face de travail 12a sensiblement plane. Les moyens de laminage 9 comprennent une sonotrode 13 à face sensiblement plane 15. Plus précisément, la face sensiblement plane 15 est généralement une surface réglée à faible convexité comme il est plus particulièrement représenté sur la figure 3.

Les stations de travail 7 et 8 sont orientées respectivement selon des directions A-A et B-B dont l'écartement d détermine la distance séparant la station de travail de soudure et de coupe 7 et la station de travail de laminage 8.

Le dispositif de raboutage 6 selon l'invention comprend des moyens d'ajustement 16 de la position relative des moyens de laminage 9 et de la zone de soudure et de découpe à laminer, de telle sorte que, après soudure et coupe et après déplacement de la zone de soudure et de découpe vers la station de travail de laminage 8 selon le mouvement illustré par la flèche 10, la zone de soudure et de découpe à laminer est placée en correspondance des moyens de laminage 9.

Dans le premier mode de réalisation de l'invention, on voit plus particulièrement sur la figure 3 que les moyens d'ajustement 16 comprennent des moyens de déplacement de la station de travail de laminage 8 permettant de déplacer la station de travail de laminage 8 vers et à l'écart de la station de travail de soudure et de coupe 7. Les moyens d'ajustement 16 comprennent en outre des moyens de verrouillage adaptés pour fixer la station de travail de laminage 8 à différentes distances d de la station de travail de soudure et de coupe 7.

En pratique, la station de travail de laminage 8 est portée par un support 17 destiné à être rendu solidaire de deux flasques de positionnement 18a et 18b par l'intermédiaire de vis (non représentées) engagées dans des trous oblongs de fixation 19a à 19d. Les trous oblongs de fixation 19a à 19d permettent de déplacer la station de travail de laminage 8 vers et à l'écart de la station de travail de soudure et de coupe 7 pour faire varier la distance d les séparant. Les vis destinées à être engagées dans les trous oblongs 19a à 19d permettent de verrouiller les stations de travail 7 et 8 écartées d'une distance d déterminée.

Dans le cas de la figure 3, on constate que la station de travail de soudure et de coupe 7 est également portée par un support 20 destiné à être rendu solidaire des flasques de positionnement 18a et 18b par l'intermédiaire de vis (non représentées) engagées dans des trous oblongs de fixation 21 a à 21 d. La station de travail de soudure et de coupe 7 peut ainsi être déplacée vers et à l'écart de la station de travail de travail de laminage 8.

Les moyens d'ajustement 16 permettent de régler la position relative de la station de travail de soudure et de coupe 7 et de la station de travail de laminage 8 de façon que, après déplacement du produit 2 (non représenté) depuis la station de travail et de coupe 7 vers la station de travail de laminage 8, la zone de soudure et de découpe à laminer soit placée en correspondance exacte des moyens de laminage 9.

Une fois la distance d réglée pour un type de produit, le réglage peut être conservé tant que la machine 1 traite un produit 2 de même nature avec des caractéristiques mécaniques sensiblement identiques. On peut ainsi automatiser les opérations de raboutage au moyen d'une avance de produit 2 prédéterminée et reproductible entre les stations de soudure et de coupe 7 et de laminage 8 dont la distance d d'écartement aura été réglée.

L'utilisation du dispositif de raboutage 6 des figures 2 et 3 va désormais être expliquée à l'aide des figures schématiques 4 à 9 illustrant une opération de raboutage de l'extrémité 20' finale d'un produit 2' issu du déroulement de la bobine de dévidage 4 à l'extrémité 20" initiale d'un produit 2" issu du déroulement de la bobine de dévidage 3 pour former un seul produit 2 continu.

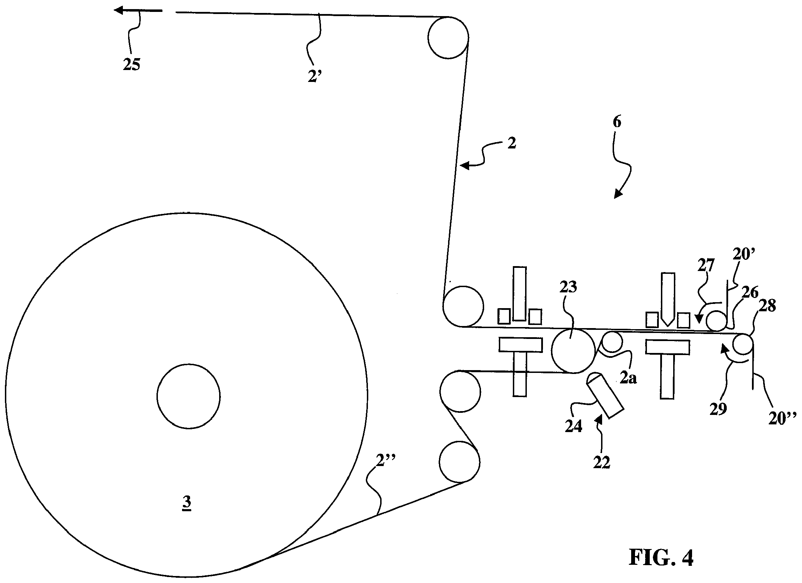

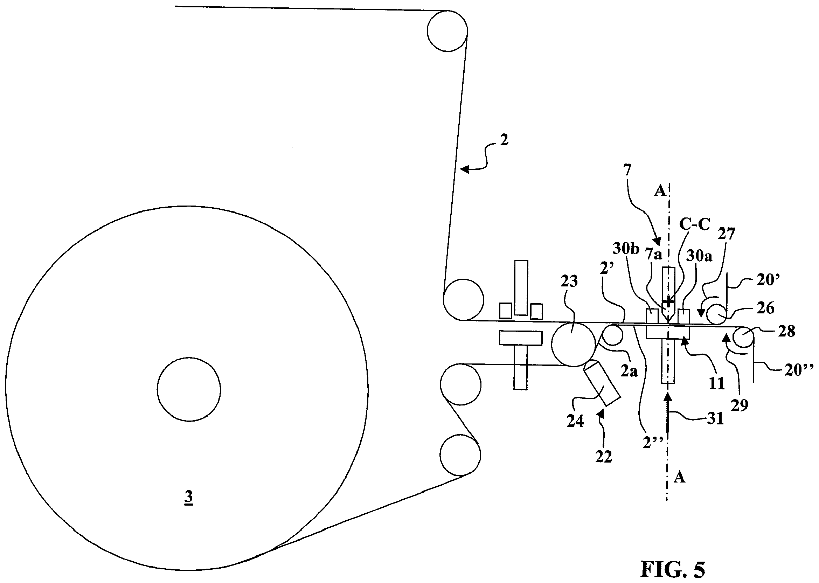

Le dispositif 6 comprend des moyens de retenue 22 (non représentés sur les figures 2 et 3) du produit 2 en amont de la station de travail de soudure et de coupe 7, aptes à bloquer un tronçon amont 2a du produit 2 s'étendant depuis les moyens de retenue 22 jusqu'à la station de travail de soudure et de coupe 7. Pour ce faire, on voit sur les figures 4 et 5 que les moyens de retenue 22 du produit 2 en amont de la station de travail de soudure et de coupe 7 comprennent :
- une troisième barre de renvoi 23 de produit 2,
- des moyens de pincement 24, déplaçables sélectivement entre une position de retenue (figure 5) dans laquelle les moyens de pincement 24 viennent en appui sur la troisième barre de renvoi 23 de produit 2 par l'intermédiaire du produit 2, et une position de libération (figure 4) dans laquelle les moyens de pincement 24 sont à l'écart de la troisième barre de renvoi 23.

Préalablement aux opérations de raboutage, la machine 1 est arrêtée de sorte que le produit 2' ne se déplace plus selon le mouvement illustré par la flèche 25. L'opérateur saisit alors l'extrémité 20' du produit 2' pour mettre en tension le produit 2' entre la station de travail ultérieur (non représentée) et une barre de mise en tension 26. Pour ce faire, la barre de mise en tension 26 est munie de moyens d'accrochage de l'extrémité 20' à l'aide de picots ou de tout autre moyen approprié. Une rotation de la barre de mise en tension 26 selon le mouvement illustré par la flèche 27 permet de mettre le produit 2' en tension.

L'opérateur met ensuite en place le produit 2" en amenant son extrémité 20" sur une barre de mise en tension 28.

Pour éviter tout mouvement de la bobine de dévidage 3 lors de la mise en tension du produit 2' par la barre de mise en tension 28, les moyens de pincement 24 sont déplacés en position de retenue (figure 5). La barre de mise en tension 28 est alors tournée selon le mouvement illustré par la flèche 29 : le tronçon amont 2a de produit 2 s'étendant depuis les moyens de retenue 22 jusqu'à la station de travail de soudure et de coupe 7 est ainsi mis en tension et immobilisé.

On voit sur la figure 5 que la contrepartie de soudure et de coupe 11 est alors déplacée vers des moyens de pressage 30a et 30b selon un mouvement de translation illustré par la flèche 31. Les moyens de pressage 30a et 30b viennent ensuite en appui contre la contrepartie de soudure et de coupe 11 par l'intermédiaire de deux épaisseurs de produit 2, à savoir les produits 2' et 2".

Les moyens de coupe soudante 7a sont alors déplacés selon la direction transversale C-C selon la largeur du produit 2 pour effectuer simultanément les opérations de soudure et de coupe.

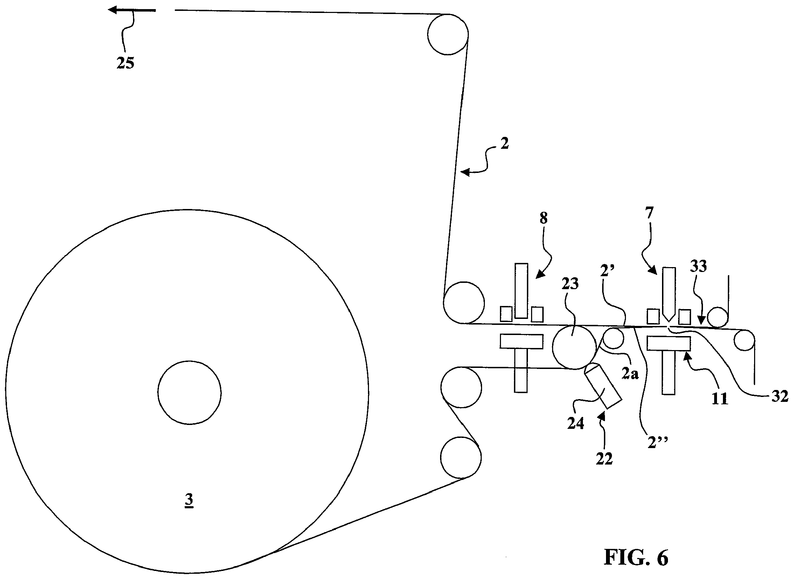

En fin de déplacement des moyens de coupe soudante 7a, la contrepartie de soudure et de coupe 11 est déplacée à l'écart des moyens de pressage 30a et 30b et on se trouve dans la configuration illustrée sur la figure 6.

Dans cette configuration, les produits 2' et 2" sont joints selon une zone de soudure et de découpe 32.

Les parties de produits 2' et 2" situées de l'autre côté de la zone de soudure et de découpe 32 constituent un déchet 33 qui est évacué.

Le produit 2' est alors avancé par traction selon un mouvement de translation illustré par la flèche 25, tandis que le produit 2" est retenu par les moyens de retenue 22.

Il en résulte que la zone de soudure et de découpe 32 se déplace depuis la station de travail de soudure et de coupe 7 vers la station de travail de laminage 8. Du fait du déplacement, la zone de soudure et de découpe 32 est légèrement déformée par une remise partielle à plat et forme ainsi une sorte de bec 32a dont la résistance par soudure est fragile et précaire. La zone de soudure et de découpe 32 doit alors être laminée pour effacer le bec 32a afin d'obtenir une zone de soudure et de découpe 32 sensiblement plane, régulière et de résistance supérieure.

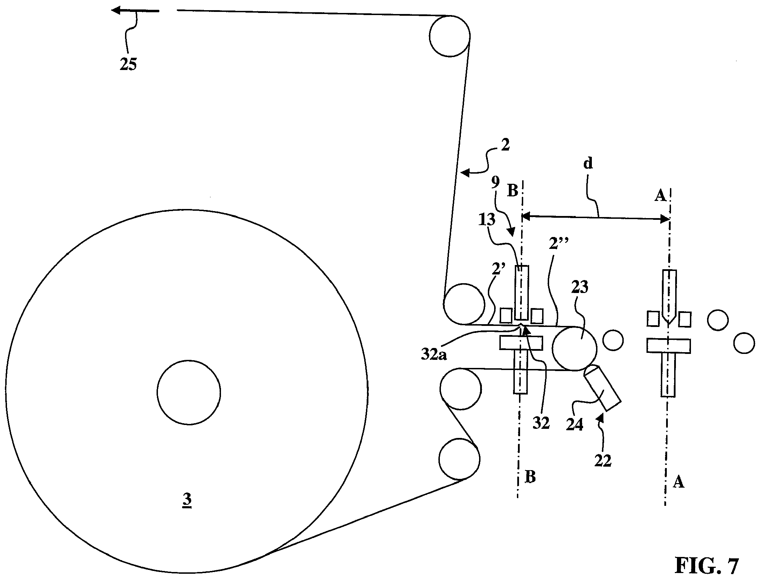

Sur la figure 7, on observe que la zone de soudure et de découpe 32 est placée en correspondance des moyens de laminage 9. Cette position relative des moyens de laminage 9 et de la zone de soudure et de découpe 32 à laminer est rendue fiable à l'aide des moyens d'ajustement 16 (non visibles sur la figure 7) qui ont été préalablement réglés lors d'essais de telle sorte que, après soudure et coupe et après déplacement de la zone de soudure et de découpe 32 vers la station de travail de laminage 8, la zone de soudure et de découpe 32 à laminer est placée en correspondance des moyens de laminage 9.

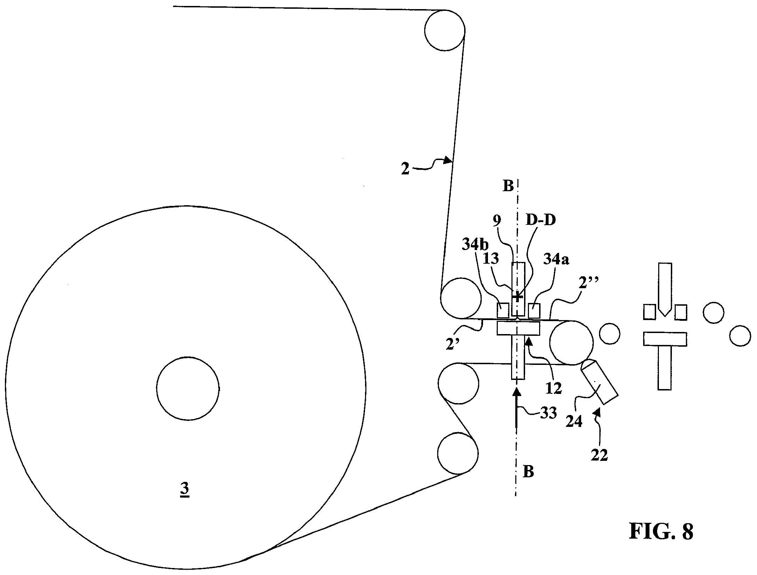

Le laminage de la zone de soudure et de découpe 32 est alors réalisé. Pour ce faire, la contrepartie de laminage 12 est déplacée selon un mouvement de translation illustré par la flèche 33 (figure 8) jusqu'à venir en appui contre des moyens de pressage 34a et 34b de la station de travail de laminage 8. Les moyens de laminage 9 à sonotrode 13 sont alors déplacés selon une direction transversale D-D selon la largeur du produit 2' sur toute la longueur de la zone de soudure et de découpe 32.

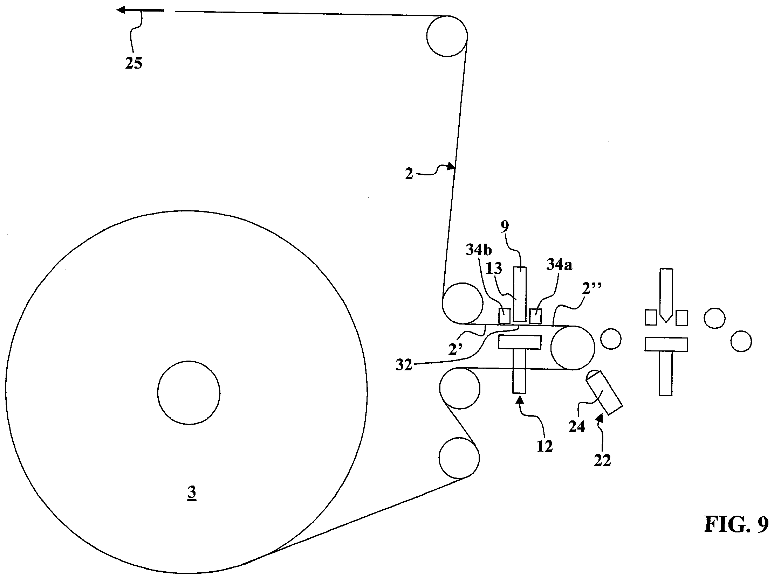

En fin de déplacement des moyens de laminage 9, la contrepartie de laminage 12 est déplacée à l'écart des moyens de pressage 34a et 34b et les moyens de pincement 24 sont déplacés en position de libération. On se trouve alors dans la configuration illustrée sur la figure 9, dans laquelle le produit 2' est relié au produit 2" par une zone de soudure et de découpe 32 qui a été laminée. Le produit 2' peut alors être entraîné selon le mouvement illustré par la flèche 25 vers la station de travail ultérieur (non représentée) ce qui entraînera alors également le produit 2" vers la station de travail ultérieur en déroulant la bobine de dévidage 3.

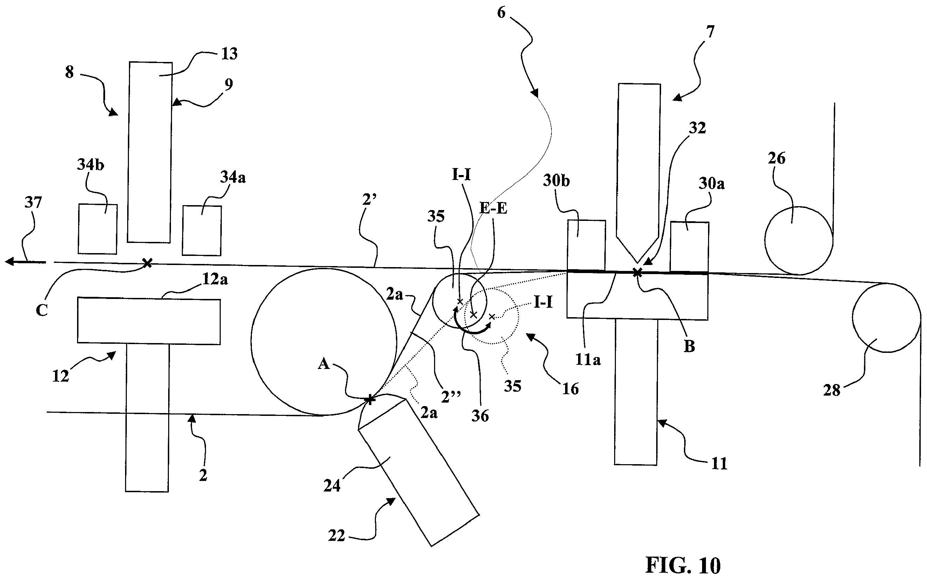

La figure 10 illustre un deuxième mode de réalisation de moyens d'ajustement 16, qui peut être une alternative ou un complément du premier mode de réalisation décrit à l'aide des figures 2 et 3.

Sur la figure 10, le dispositif de raboutage 6 comprend également des moyens de retenue 22 du produit 2 en amont de la station de travail de soudure et de coupe 7, aptes à bloquer un tronçon amont 2a de produit 2 s'étendant depuis les moyens de retenue 22 jusqu'à la station de travail de soudure et de coupe 7.

Les moyens d'ajustement 16 comprennent une première barre de renvoi 35 de produit, située entre les moyens de retenue 22 et la station de travail de soudure et de coupe 7 et s'allongeant selon une première direction d'allongement I-I perpendiculaire à la direction d'avance du produit 2 (c'est-à-dire selon la largeur du produit 2).

Les moyens d'ajustement 16 comprennent également des premiers moyens de déplacement transversal de la première barre de renvoi 35, aptes à déplacer la première barre de renvoi 35 de façon à ajuster la longueur du tronçon amont 2a de produit 2 s'étendant depuis les moyens de retenue 22 jusqu'à la station de travail de soudure et de coupe 7.

Dans le cas de la figure 10, les premiers moyens de déplacement transversal sont adaptés pour déplacer la première barre de renvoi 35 selon un mouvement de rotation illustré par la double flèche 36 autour d'un axe E-E déporté et parallèle à la direction d'allongement I-I de ladite première barre de renvoi 35.

Le réglage des moyens d'ajustement 16 à effectuer préalablement consiste à positionner par rotation la première barre de renvoi 35 dans une position telle que la longueur du chemin parcouru par le tronçon amont 2a de produit 2 s'étendant entre les moyens de retenue 22 (point A) et la station de travail de soudure et de coupe 7 et plus particulièrement jusqu'à la zone de soudure et de découpe 32 qui sera créée (point B), soit égale à la longueur du chemin parcouru par le produit entre les moyens de retenue 22 (point A) et la station de travail de laminage 8 (point C) après avance du produit 2 selon le mouvement illustré par la flèche 37. En d'autres termes, la position de la première barre de renvoi 35 est ajustée de telle sorte que la longueur de produit entre les points A et B avant avance du produit soit égale à la longueur de produit s'étendant entre les points A et C après avance du produit 2.

En alternative à un déplacement en rotation de la première barre de renvoi 35, on peut prévoir un déplacement par un mouvement de translation.

Sur les figures 4 à 10, la zone de soudure et de découpe 32 du produit 2 est déplacée depuis la station de travail de soudure et de coupe 7 vers la station de travail de laminage 8 par des moyens d'avance du produit 2 d'une station de travail ultérieur (non représentée) située en aval de la station de travail de laminage 8.

Dans le cas où les moyens d'avance du produit 2 de la station de travail ultérieur sont impropres à assurer un déplacement déterminé, fiable et reproductible du produit 2 (par exemple du fait d'une grande inertie), il est préférable d'intégrer des moyens d'avance du produit 2 propres au dispositif de raboutage 6. Cela évite également de faire travailler la station de travail ultérieur à une trop faible vitesse lors du déplacement de la zone de soudure et de découpe 32 vers la station de travail de laminage 8.

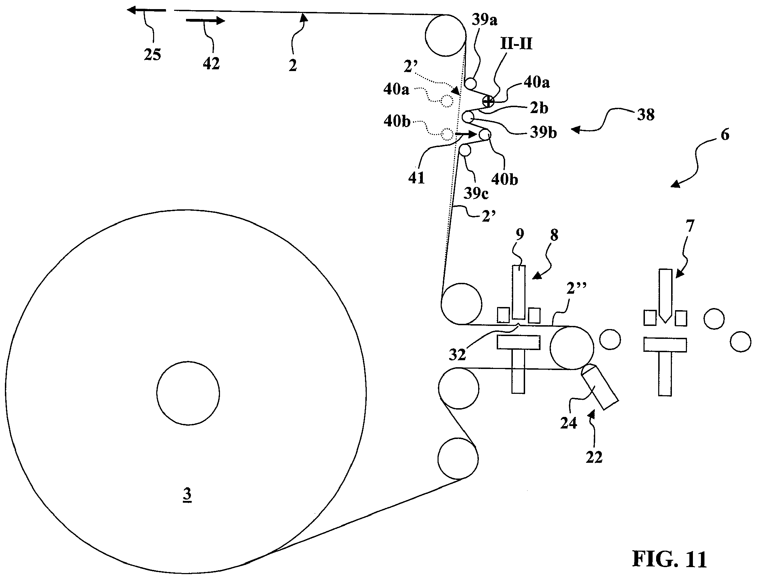

Dans une première variante illustrée sur la figure 11, le dispositif de raboutage 6 comporte des moyens d'accumulation 38 que traverse le produit 2 en aval de la station de travail de laminage 8. Les moyens d'accumulation 38 sont adaptés pour déplacer par traction la zone de soudure et de découpe 32 depuis la station de travail de soudure et de coupe 7 vers la station de travail de laminage 8.

Sur la figure 11, le produit 2 traverse les moyens d'accumulation 38 selon un parcours en zigzag dont la longueur est ajustable.

Dans le cas de la figure 11, les moyens d'accumulation 38 comportent trois barres de renvoi fixes 39a à 39c de produit 2 et comportent également deux deuxièmes barres de renvoi 40a et 40b de produit 2, situées en aval de la station de travail de laminage 8 et s'allongeant selon une deuxième direction d'allongement II-II perpendiculaire à la direction d'avance du produit 2. Des deuxièmes moyens de déplacement transversal des deuxièmes barres de renvoi 40a et 40b permettent de déplacer ces dernières de façon à ajuster la longueur du tronçon 2b de produit 2 situé en aval de la station de travail de laminage 8.

En pratique, les deuxièmes barres de renvoi 40a et 40b sont déplaçables, selon un mouvement illustré par la flèche 41, entre une position de repos (illustrée en pointillés) dans laquelle elles ne touchent pas le produit 2, et une position d'accumulation (illustrée en traits pleins) dans laquelle les deuxièmes barres de renvoi 40a et 40b amènent le produit 2 au contact des barres de renvoi fixes 39a à 39c pour accumuler le produit 2 selon un parcours en zigzag entre les barres de renvoi fixes 39a et 39c.

De préférence, en position de repos des deuxièmes barres de renvoi 40a et 40b, le produit 2 ne touche ni les deuxièmes barres de renvoi 40a et 40b ni les barres de renvoi fixes 39a à 39c pour ne pas induire de résistance supplémentaire à l'avancement du produit 2 selon le mouvement illustré par la flèche 25.

L'accumulation du produit 2 selon son parcours en zigzag entre les barres de renvoi 39a à 39c et 40a et 40b permet d'amener par traction la zone de soudure et de découpe 32 en correspondance exacte des moyens de laminage 9 sans avoir à déplacer le produit 2 en aval selon le mouvement illustré par la flèche 25.

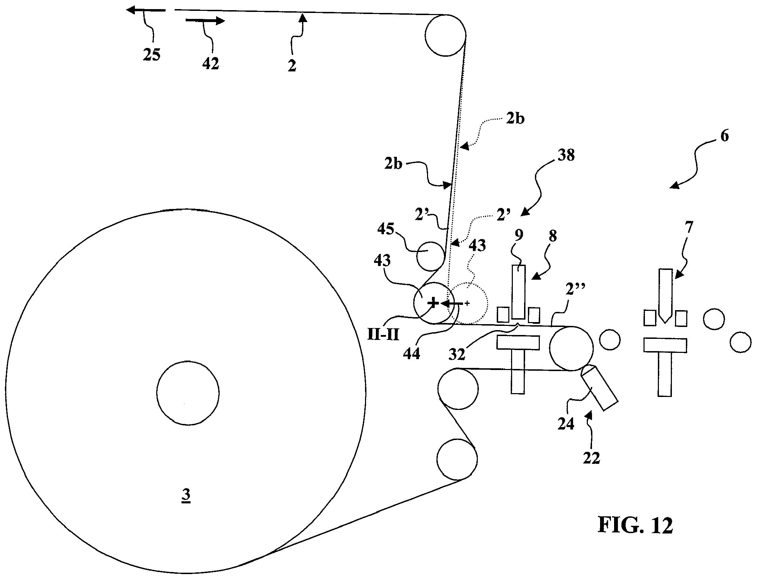

La figure 12 illustre une deuxième variante des moyens d'accumulation 38 dans laquelle les moyens d'accumulation ne comportent qu'une unique deuxième barre de renvoi 43 située en aval de la station de travail de laminage 8 et s'allongeant selon la deuxième direction d'allongement II-II. Les deuxièmes moyens de déplacement transversal sont adaptés pour déplacer la deuxième barre de renvoi 43 selon un mouvement de translation illustré par la flèche 44, ce qui permet d'ajuster la longueur du tronçon 2b de produit 2 situé en aval de la station de travail de laminage 8 pour amener par traction la zone de soudure et de découpe 32 à laminer en correspondance exacte des moyens de laminage 9.

Sur la figure 12, le tronçon 2b de produit 2 vient, après déplacement de la deuxième barre de renvoi 43, au contact d'une barre de renvoi fixe 45. Cette barre de renvoi fixe 45 est optionnelle.

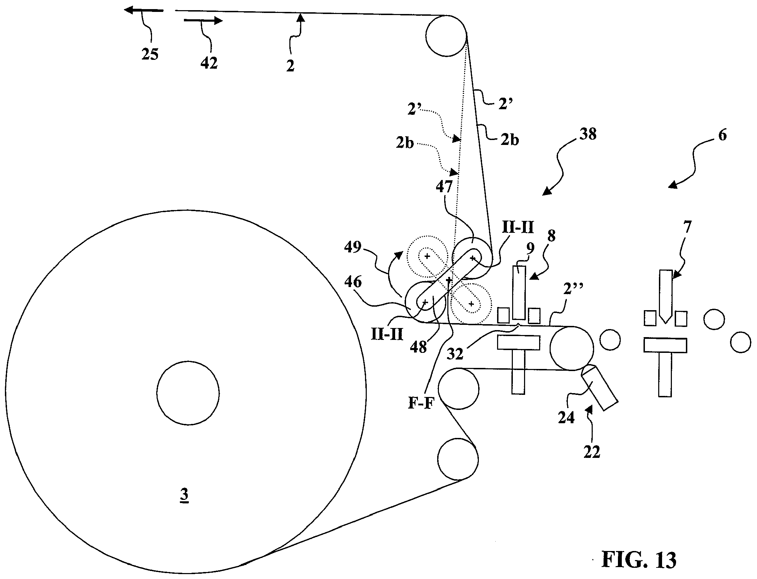

Dans les première et deuxième variantes illustrées sur les figures 11 et 12, les deuxièmes barres de renvoi 40a, 40b et 43 sont déplacées selon un mouvement de translation. Ces deuxièmes barres de renvoi 40a, 40b et 43 pourraient cependant être déplacées selon un mouvement de rotation autour d'un axe déporté et parallèle à leur direction d'allongement II-II. Ce mouvement de déplacement en rotation d'une deuxième barre de renvoi fait l'objet de la troisième variante illustrée sur la figure 13.

Sur cette figure, les moyens d'accumulation 38 comportent deux deuxièmes barres de renvoi 46 et 47 situées en aval de la station de travail de laminage 8 et s'allongeant selon une deuxième direction d'allongement II-II perpendiculaire à la direction d'avance du produit 2.

Les deuxièmes barres de renvoi 46 et 47 sont reliées l'une à l'autre de façon rigide par une entretoise 48 montée à pivotement autour d'un axe F-F parallèle à la deuxième direction d'allongement II-II. Pour ajuster la longueur du tronçon 2b de produit 2 située en aval de la station de travail de laminage 8, les deuxièmes barres de renvoi 46 et 47 sont déplacées en rotation autour de l'axe F-F selon un mouvement illustré par la flèche 49. Les deuxièmes barres de renvoi 46 et 47 sont ainsi déplacées d'une position de repos (en pointillés) vers une position d'accumulation (illustrée en traits pleins).

L'ajustement de la longueur du tronçon 2b de produit 2 situé en aval de la station de travail de laminage 8 permet d'amener par traction la zone de soudure et de découpe 32 à laminer en correspondance exacte des moyens de laminage 9.

Dans les première, deuxième et troisième variantes des figures 11 à 13, il peut être nécessaire de prévoir des moyens de retenue (non représentés) du produit 2 en aval des moyens d'accumulation 38, ou des moyens d'avance irréversibles du produit 2 de la station de travail ultérieur, de façon que le produit 2 ne puisse pas être déplacé selon un mouvement illustré par la flèche 42 lors du fonctionnement des moyens d'accumulation 38. Cela permet de ne pas induire d'imprécision dans l'avancement du produit 2 provoqué par les moyens d'accumulation 38.

Lors de l'opération de laminage par les moyens de laminage 9, il est important que le produit 2 soit maintenu intercalé entre la contrepartie de laminage 12 et la face sensiblement plane 15 de la sonotrode 13.

Cependant, du fait de la longueur généralement importante de la contrepartie de laminage 12, cette dernière peut présenter une flèche et des déformations en torsion.

Il faut alors s'assurer que la sonotrode 13 suive au plus près la face de travail 12a de la contrepartie de laminage 12, malgré ces éventuelles flèche et torsion.

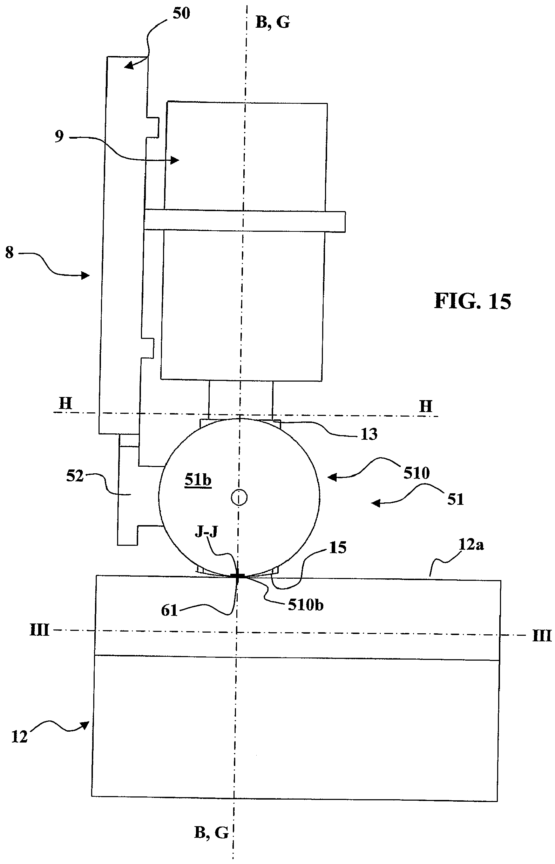

Pour ce faire, on prévoit, comme illustré sur les figures 15 à 17, que :
- la station de travail de laminage 8 comprend une contrepartie de laminage 12 s'étendant selon une troisième direction d'allongement III-III, à face de travail 12a sensiblement plane,
- les moyens de laminage 9 sont solidaires d'un support 50 déplaçable selon la troisième direction d'allongement III-III en vis-à-vis de la contrepartie de laminage 12,
- les moyens de laminage 9 sont solidaires de moyens d'appui 51 (en l'espèce des moyens de roulement 510) conformés pour venir en appui contre la face de travail 12a de la contrepartie de laminage 12,
- les moyens de laminage 9 sont solidaires du support 50 par l'intermédiaire de moyens de liaison 52 conformés pour autoriser :
   - un mouvement de translation selon une direction G-G sensiblement perpendiculaire au plan de la face de travail 12a,
   - un mouvement de rotation autour d'une direction H-H sensiblement parallèle à la troisième direction d'allongement III-III.

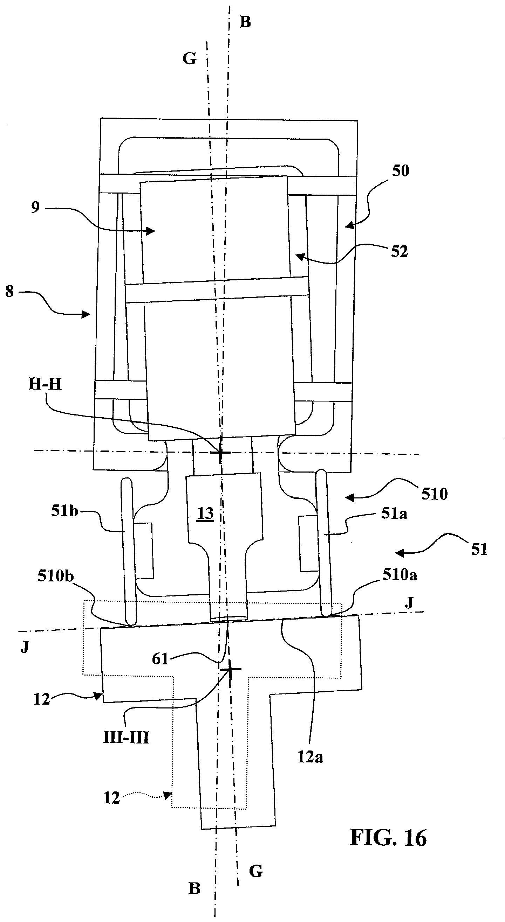

La sonotrode 13 de la station de travail de laminage 8 est ainsi à même de suivre les éventuelles déformations de la face de travail 12a de la contrepartie de laminage 12 tout au long de la contrepartie de laminage 12 comme illustré sur la figure 16 sur laquelle la contrepartie de laminage 12 devant occuper une position théorique illustrée en pointillés occupe en réalité la position illustrée en traits pleins du fait de déformations par flèche et torsion. Le support 50 reste orienté selon la direction B-B.

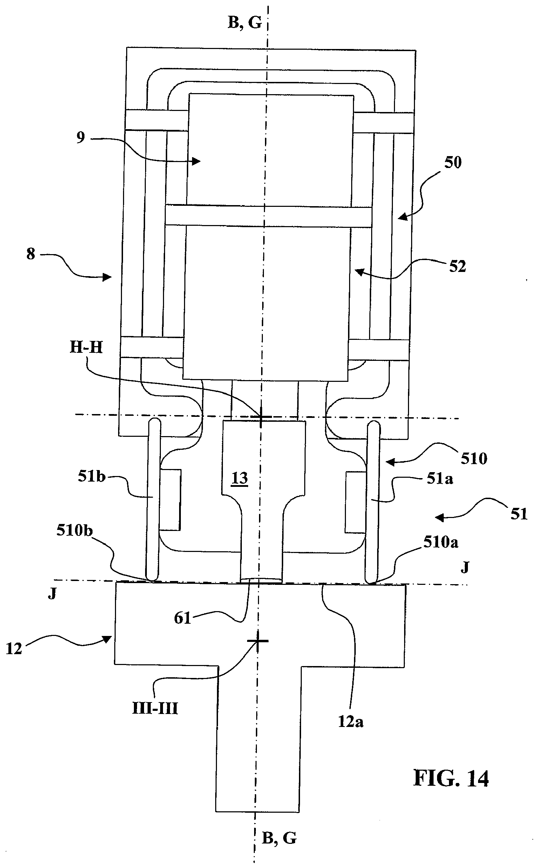

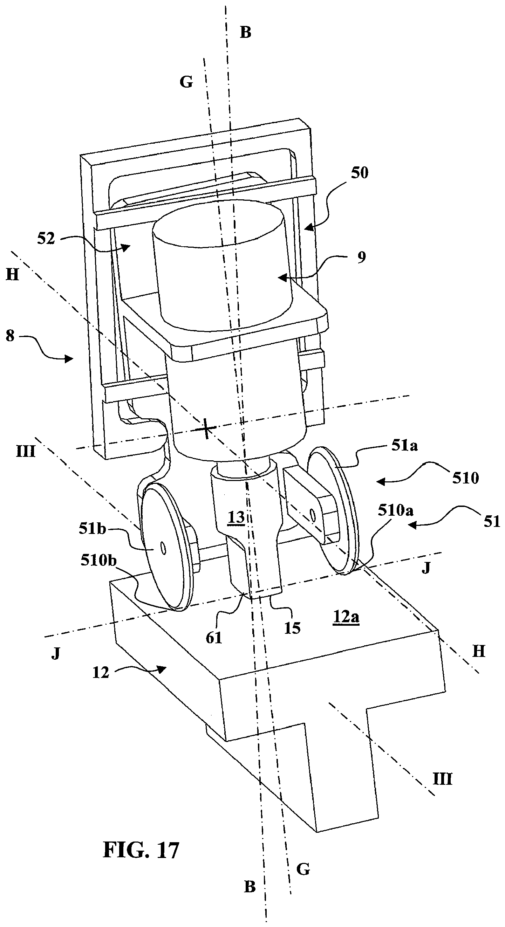

Sur les figures 14 et 17, les moyens de roulement 510 comprennent deux roues 51 a, 51 b situées de part et d'autre des moyens de laminage 9 de telle sorte à venir, par l'intermédiaire du produit 2 (non représenté) en appui contre la face de travail 12a de la contrepartie de laminage 12 de part et d'autre de la zone de soudure et de découpe 32 (non représentée) à laminer.

Comme il est plus particulièrement visible sur les figures 15 et 17, les roues 51 a et 51 b viennent respectivement au contact de la contrepartie de laminage 12 par l'intermédiaire du produit 2 (non représenté) en deux points 510a et 510b qui définissent une direction de contact J-J définissant un plan avec la direction G-G d'orientation de la sonotrode 13. De préférence, l'arête inférieure 61 de la face sensiblement plane 15 de la sonotrode 13 est comprise dans le plan défini par les directions J-J et G-G. Sur la figure 17, l'arête inférieure 61 coïncide sensiblement avec la direction de contact J-J.

Il est à noter qu'un support et des moyens de liaison semblables au support 50 et aux moyens de liaison 52 peuvent également être utilisés pour la station de travail de soudure et de coupe 7 dont la contrepartie de soudure et de coupe 11 peut également présenter des déformations.

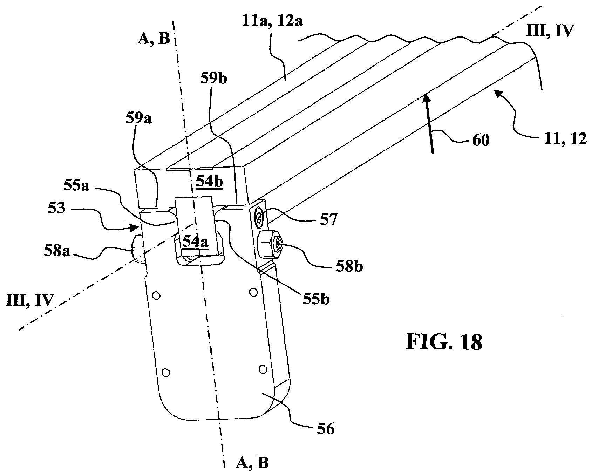

En alternative ou en complément des moyens de liaison 52 particuliers utilisés pour la station de travail de laminage 8 sur les figures 14 à 17, on peut prévoir des moyens de déformation 53 de la surface de travail 11 a, 12a de la contrepartie de soudure et de coupe 11 et/ou de la contrepartie de laminage 12, comme représenté sur la figure 18.

Sur cette figure 18, la contrepartie de soudure et de découpe 11 et/ou la contrepartie de laminage 12 comprend une section transversale en forme de T. En l'espèce, cette section transversale en forme de T est obtenue par la liaison de deux profilés 54a et 54b. En alternative, la section transversale en forme de T peut être obtenue par un seul et même profilé massif. La face de travail 11a ou 12a est portée par la face externe de la barre supérieure du T formée par le profilé 54b.

La barre verticale du T, formée par le profilé 54a est maintenue serrée entre deux mâchoires 55a et 55b d'un flasque de tenue 56 fixe. Le serrage du profilé 54a dans les mâchoires 55a et 55b est assuré au moyen d'au moins une vis de serrage 57.

Les moyens de déformation 53 comprennent deux vis 58a et 58b destinées à venir en appui contre la barre verticale du T formée par le profilé 54a.

Le serrage plus ou moins important des vis 58a et 58b permet de soumettre la contrepartie de soudure et de coupe 11 et la contrepartie de laminage 12 à un couple de torsion autour de la direction III-III ou IV-IV afin de redresser la face de travail 11a ou 12a déformée par une torsion déformante préexistante.

Il est à noter que les moyens de déformation 53 peuvent de préférence comporter un flasque de tenue 56 identique à celui de la figure 18 à chacune des extrémités de la contrepartie de soudure et de coupe 11 ou de la contrepartie de laminage 12.

En alternative ou en complément, les moyens de déformation 53 peuvent comprendre des vis de réglage destinées à venir en appui contre les sous-faces 59a et 59b de la contrepartie de soudure et de coupe 11 ou de la contrepartie de laminage 12 pour provoquer un appui selon le sens et la direction définis par la flèche 60. De tels moyens de déformation 53 permettent d'induire sur la contrepartie de soudure et de coupe 11 ou sur la contrepartie de laminage 12 une déformation compensant une flèche préexistante. Il est à noter que l'appui illustré par la flèche 60 est nécessairement distant des troisième ou quatrième directions d'allongement III-III et IV-IV et peut donc également induire sur la contrepartie de soudure et de coupe 11 ou sur la contrepartie de laminage 12 une torsion qui compense une torsion inverse préexistante.

Il est explicitement précisé que le support 50 et les moyens de liaison 52 particuliers illustrés sur les figures 14 à 17 constituent une invention indépendante des moyens d'ajustement 16. Ce support 50 et ces moyens de liaison 52 peuvent être utilisés dans une station de travail de laminage 8 ou dans une station de travail de soudure et de coupe 7.

De la même façon, les moyens de déformation 53 illustrés sur la figure 18 constituent une invention indépendante des moyens d'ajustement 16.

L'expression « barre de renvoi » désigne tout corps longitudinal de section quelconque contre lequel peut venir en appui le produit, et peut notamment comprendre un rouleau capable de tourner autour de sa direction d'allongement.

La présente invention n'est pas limitée aux modes de réalisation qui ont été explicitement décrits, mais elle en inclut les diverses variantes et généralisations contenues dans le domaine des revendications ci-après.

## Revendications

1. Dispositif de raboutage (6) d'un produit (2, 2', 2") en bande ou en nappe de matière, comprenant :
- une station de travail de soudure et de coupe (7), apte à souder par échauffement et découper deux épaisseurs de produit (2, 2', 2") selon une zone de soudure et de découpe (32),
- une station de travail de laminage (8) à moyens de laminage (9) par échauffement de la zone de soudure et de découpe (32),
entre lesquelles est destiné à être déplacé ledit produit (2, 2', 2") en bande ou en nappe de matière selon un déplacement défini par des moyens de retenue (22) du produit (2, 2") en amont de la station de travail de laminage (8) et par des moyens de traction du produit (2, 2', 2") en aval de la station de travail de laminage (8), **caractérisé en ce que**, dans la station de travail de soudure et de coupe et dans la station de travail de laminage, l'échauffement est réalisé par ultrasons, et **en ce que** le dispositif comprend des moyens d'ajustement (16) de la position relative des moyens de laminage (9) et de la zone de soudure et de découpe (32) à laminer, de telle sorte que, après soudure et coupe et après déplacement de la zone de soudure et de découpe (32) vers la station de travail de laminage (8), la zone de soudure et de découpe (32) à laminer est placée en correspondance des moyens de laminage (9).

2. Dispositif (6) selon la revendication 1, **caractérisé en ce que** :
- les moyens d'ajustement (16) comprennent des moyens de déplacement relatif des station de travail de laminage (8) et station de travail de soudure et de coupe (7),
- les moyens d'ajustement (16) comprennent des moyens de verrouillage adaptés pour fixer la station de travail de laminage (8) et la station de travail de soudure et de coupe (7) à différentes distances (d) d'écartement relatif.

3. Dispositif (6) selon la revendication 1 ou 2, **caractérisé en ce que** :
- les moyens d'ajustement (16) comprennent une première barre de renvoi (35) de produit (2, 2"), située entre les moyens de retenue (22) et la station de travail de soudure et de coupe (7) et s'allongeant selon une première direction d'allongement (I-I) perpendiculaire à la direction d'avance du produit (2, 2"),
- les moyens d'ajustement (16) comprennent des premiers moyens de déplacement transversal de la première barre de renvoi (35), aptes à déplacer la première barre de renvoi (35) de façon à ajuster la longueur du tronçon amont (2a) de produit (2, 2") s'étendant depuis les moyens de retenue (22) jusqu'à la station de travail de soudure et de coupe (7).

4. Dispositif (6) selon l'une quelconque des revendications 1 à 3, **caractérisé en ce qu'**il comprend des moyens de retenue (22) du produit (2, 2") en amont de la station de travail de soudure et de coupe (7), aptes à bloquer un tronçon amont (2a) de produit (2, 2") s'étendant depuis les moyens de retenue (22) jusqu'à la station de travail de soudure et de coupe (7), et comportant de préférence :
- une troisième barre de renvoi (23) de produit (2, 2"),
- des moyens de pincement (24), déplaçables sélectivement entre une position de retenue dans laquelle les moyens de pincement (24) viennent en appui sur la troisième barre de renvoi (23) de produit (2, 2") par l'intermédiaire du produit (2, 2"), et une position de libération dans laquelle les moyens de pincement (24) sont à l'écart de la troisième barre de renvoi (23).

5. Dispositif (6) selon l'une quelconque des revendications 1 à 4, **caractérisé en ce que** :
- la station de travail de laminage (8) comprend une contrepartie de laminage (12) s'étendant selon une troisième direction d'allongement (III-III), à face de travail (12a) sensiblement plane,
- les moyens de laminage (9) sont solidaires d'un support (50) déplaçable selon la troisième direction d'allongement (III-III) en vis-à-vis de la contrepartie de laminage (12),
- les moyens de laminage (9) sont solidaires de moyens d'appui (51) conformés pour venir en appui contre la face de travail (12a) de la contrepartie de laminage (12),
- les moyens de laminage (9) sont solidaires du support (50) par l'intermédiaire de moyens de liaison (52) conformés pour autoriser :
• un mouvement de translation selon une direction (G-G) sensiblement perpendiculaire au plan de la face de travail (12a),
• un mouvement de rotation autour d'une direction (H-H) sensiblement parallèle à la troisième direction d'allongement (III-III).

6. Dispositif (6) selon la revendication 5, **caractérisé en ce que** les moyens d'appui (51) sont situés de part et d'autre des moyens de laminage (9) de telle sorte à venir, par l'intermédiaire du produit (2, 2', 2"), en appui contre la face de travail (12a) de la contrepartie de laminage (12) de part et d'autre de la zone de soudure et de découpe (32) à laminer, et comprennent de préférence des moyens de roulement (510) à deux roues (51 a, 51 b).

7. Dispositif (6) selon l'une quelconque des revendications 1 à 6, **caractérisé en ce que** la zone de soudure et de découpe (32) du produit (2) est déplacée par traction depuis la station de travail de soudure et de coupe (7) vers la station de travail de laminage (8) par des moyens d'avance du produit (2, 2', 2") d'une station de travail ultérieur située en aval de la station de travail de laminage (8).

8. Dispositif (6) selon l'une quelconque des revendications 1 à 6, **caractérisé en ce que** :
- le dispositif (6) comporte des moyens d'accumulation (38) que traverse le produit (2, 2', 2") en aval de la station de travail de laminage (8),
- les moyens d'accumulation (38) sont adaptés pour déplacer par traction la zone de soudure et de découpe (32) à laminer du produit (2, 2', 2") depuis la station de travail de soudure et de coupe (7) vers la station de travail de laminage (8).

9. Dispositif (6) selon la revendication 8, **caractérisé en ce que** le produit (2, 2', 2") traverse les moyens d'accumulation (38) selon un parcours en zigzag dont la longueur est ajustable.

10. Dispositif (6) selon l'une des revendications 8 ou 9, **caractérisé en ce que** les moyens d'accumulation (38) comprennent :
- au moins une deuxième barre de renvoi (40a, 40b, 43) de produit (2, 2', 2"), située en aval de la station de travail de laminage (8) et s'allongeant selon une deuxième direction d'allongement (II-II) perpendiculaire à la direction d'avance du produit (2, 2', 2"),
- des deuxièmes moyens de déplacement transversal de la deuxième barre de renvoi (40a, 40b, 43) de façon à ajuster la longueur du tronçon (2b) de produit (2, 2', 2") situé en aval de la station de travail de laminage (8).

11. Dispositif (6) selon l'une des revendications 3 ou 10, **caractérisé en ce que** les moyens de déplacement déplacent la première (35) ou la deuxième (40a, 40b, 43) barre de renvoi selon un mouvement de translation.

12. Dispositif (6) selon l'une des revendications 3 ou 10, **caractérisé en ce que** les moyens de déplacement déplacent la première (35) ou la deuxième (40a, 40b, 43) barre de renvoi selon un mouvement de rotation autour d'un axe déporté (E-E) parallèle à la direction d'allongement (I-I, II-II) de ladite première (35) ou deuxième (40a, 40b, 43) barre de renvoi.

13. Dispositif (6) selon l'une quelconque des revendications 1 à 12, **caractérisé en ce que** la station de travail de soudure et de coupe (7) comprend des moyens de coupe soudante (7a).

14. Dispositif (6) selon la revendication 13, **caractérisé en ce que** :
- la station de travail de soudure et de coupe (7) comprend une contrepartie de soudure et de coupe (11) s'étendant selon une quatrième direction d'allongement (IV-IV), à face de travail (11a) sensiblement plane,
- les moyens de coupe soudante (7a) comprennent une sonotrode (7b) à face affûtée (7c).

15. Dispositif (6) selon l'une quelconque des revendications 1 à 14, **caractérisé en ce que** :
- la station de travail de laminage (8) comprend une contrepartie de laminage (12) s'étendant selon une troisième direction d'allongement (III-III), à face de travail (12a) sensiblement plane,
- les moyens de laminage (9) comprennent une sonotrode (13) à face sensiblement plane (15).

16. Dispositif (6) selon l'une des revendications 14 ou 15, **caractérisé en ce qu'**il comprend des moyens de déformation (53) de la surface de travail (11a, 12a) de la contrepartie de soudure et de coupe (11) et/ou de la contrepartie de laminage (12).

17. Dispositif (6) selon la revendication 16, **caractérisé en ce que** :
- la contrepartie de soudure et de coupe (11) et/ou la contrepartie de laminage (12) comprend une section transversale en forme de T, la face de travail (11a, 12a) étant portée par la face externe de la barre supérieure du T (54b),
- les moyens de déformation (53) comprennent au moins une vis (58a, 58b) destinée à venir en appui contre la barre verticale du T (54a), de préférence deux vis (58a, 58b) situées chacune au voisinage d'une extrémité de ladite contrepartie (11a, 12a).

18. Dispositif (6) selon l'une des revendications 14 ou 15, **caractérisé en ce que** la station de travail de soudure et de coupe (7) et/ou la station de travail de laminage (8) comprennent des moyens de pressage (30a, 30b, 34a, 34b) destinés à venir en appui contre la contrepartie (11, 12) correspondante par l'intermédiaire du produit (2, 2', 2").

19. Dispositif (6) selon la revendication 18, **caractérisé en ce que** la et/ou les contreparties (11, 12) sont déplaçables vers les moyens de pressage (30a, 30b, 34a, 34b) correspondants pour provoquer ledit appui.

20. Machine (1) de traitement d'un produit (2, 2', 2") en bande ou en nappe de matière, **caractérisée en ce qu'**elle comprend un dispositif de raboutage (6) selon l'une quelconque des revendications 1 à 19.

## Patentansprüche

1. Vorrichtung (6) zum Aneinanderfügen eines aus streifenförmigem oder bandförmigem Material bestehenden Produktes (2, 2', 2''), umfassend :
- eine Arbeitsstation (7) zum Schweißen und Schneiden, die dazu dient, zwei Lagen des Produktes (2, 2', 2'') in einer Schweiß- und Schneidzone (32) durch Erwärmung zu verschweißen und zu trennen,
- eine Arbeitsstation (8) mit Laminiermitteln (9) zum Laminieren der Schweiß- und Schneidzone (32) durch Wäremeinwirkung,
zwischen denen das streifenförmige oder bandförmige Produkt (2, 2', 2'') entsprechend einer definierten Verstellung durch Verzögerungsmittel (22) des Produktes (2, 2'') in Arbeitsrichtung hinter der Arbeitsstation (8) zum Laminieren und durch Zugmittel des Produktes (2, 2', 2'') vor der Arbeitsstation (8) zum Laminieren verstellt wird, **dadurch gekennzeichnet, dass** in der Arbeitsstation zum Verschweißen und Schneiden und in der Arbeitsstation zum Laminieren die Erwärmung durch Ultraschall erfolgt und dass die Vorrichtung Mittel (16) zum Justieren der Relativstellung der Laminiermittel (9) und der zu laminierenden Schweiß- und Schneidzone (32) aufweist derart, dass nach dem Schweißen und Schneiden und nach dem Verschieben der Schweiß- und Schneidzone (32) in Richtung auf die Arbeitsstation (8) zum Laminieren die zu laminierende Schweiß- und Schneidzone (32) zu den Laminiermitteln (9) ausgerichtet wird.

2. Vorrichtung (6) nach Anspruch 1, **dadurch gekennzeichnet, dass** :
- die Justiermittel (16) Mittel zur Relativverschiebung der Arbeitsstation (8) zum Laminieren und der Arbeitsstation (7) zum Schweißen und Schneiden aufweisen,
- die Justiermittel (16) Feststellmittel haben, um die Arbeitsstation (8) zum Laminieren und die Arbeitsstation (7) zum Schweißen und Schneiden in unterschiedlichen Abständen (d) relativ zueinander zu fixieren.

3. Vorrichtung (6) nach Anspruch 1 oder 2, **dadurch gekennzeichnet, dass** :
- die Justiermittel (16) eine erste Umlenkstange (35) für das Produkt (2, 2'') haben, die zwischen den Verzögerungsmitteln (22) und der Arbeitsstation (7) zum Schweißen und Schneiden angeordnet ist und sich in einer ersten Richtung (I-I) erstreckt, die rechtwinklig zur Vorschubrichtung des Produktes (2, 2'') verläuft,
- die Justiermittel (16) erste Mittel zur Querverstellung der ersten Umlenkstange (35) haben, um diese so zu verstellen, dass sie die Länge des vorlaufenden Abschnitts (2a) des Produktes (2, 2'') verstellen, der sich hinter den Verzögerungsmitteln (22) bis zur Arbeitsstation (7) zum Schweißen erstreckt.

4. Vorrichtung (6) nach einem der Ansprüche 1 bis 3, **dadurch gekennzeichnet, dass** diese Verzögerungsmittel (22) für das Produkt (2, 2'') in Arbeitsrichtung hinter der Arbeitsstation (7) zum Schweißen und Schneiden des Produktes (2, 2'') aufweist, die so ausgebildet sind, dass sie einen vorlaufenden Abschnitt (2a) des Produktes (2, 2'') festhalten, der sich hinter den Verzögerungsmitteln (22) bis zur Arbeitsstation (7) zum Schweißen und Schneiden erstreckt, und die vorzugsweise enthalten :
- eine dritte Umlenkstange (23) für das Produkt (2, 2''),
- Mittel (24) zum Klemmen, die nach Wahl verstellbar sind zwischen einer Umlenkposition, in der die Mittel (24) zum Klemmen gegen das über die dritte Umlenkstange (23) laufende Produkt (2, 2'') durch das Produkt (2, 2'') zur Anlage kommen, und einer freien Stellung, in der die Mittel (24) zum Klemmen einen Abstand zu der dritten Umlenkstange (23) haben.

5. Vorrichtung (6) nach einem der Ansprüche 1 bis 4, **dadurch gekennzeichnet, dass** :
- die Arbeitsstation (8) zum Laminieren ein Gegenlaminierelement (12) mit im wesentlichen ebener Arbeitsfläche (12a) hat, das sich in einer dritten Längsrichtung (III-III) erstreckt,
- die Laminiermittel (9) an einem Träger (50) angebracht sind, der in der dritten Längsrichtung (III-III) gegenüber dem Gegenlaminierelement (12) verstellbar ist,
- die Laminiermittel (9) an Anschlagmitteln (51) angebracht sind, die so ausgebildet sind, dass sie zum Anschlag gegen die Arbeitsfläche (12a) des Gegenlaminierelementes (12) kommen können,
- die Laminiermittel (9) an dem Träger (50) über Verbindungsmittel (52) angebracht sind, die so ausgebildet sind, dass sie :
• eine Translationsbewegung in einer Richtung (G-G) ermöglichen, die im wesentlichen rechtwinklig zur Ebene der Arbeitsfläche (12a) verläuft,
• eine Rotationsbewegung um eine Achsrichtung (H-H) ermöglichen, die im wesentlichen parallel zu der dritten Längsrichtung (III-III) verläuft.

6. Vorrichtung (6) nach Anspruch 5, **dadurch gekennzeichnet, dass** die Anschlagmittel (51) auf beiden Seiten der Laminiermittel (9) angeordnet sind, so dass sie über das Produkt (2, 2', 2'') zu beiden Seiten der zu laminierenden Schweiß- und Schneidzone (32) zum Anschlag an die Arbeitsfläche (12a) des Gegenlaminierelementes (12) kommen und vorzugsweise Abrollmittel (510) mit zwei Rädern (51a, 51b) aufweisen.

7. Vorrichtung (6) nach einem der Ansprüche 1 bis 6, **dadurch gekennzeichnet, dass** die Schweiß- und Schneidzone (32) des Produktes (2) von der Arbeitsstation (7) zum Schweißen und Schneiden in Richtung auf die Arbeitsstation (8) zum Laminieren durch Zug verschiebbar ist durch Mittel zum Vorschub des Produktes (2, 2', 2'') aus einer weiteren Arbeitsstation, die vor der Arbeitsstation (8) zum Laminieren liegt.

8. Vorrichtung (6) nach einem der Ansprüche 1 bis 6, **dadurch gekennzeichnet, dass** :
- die Vorrichtung (6) Puffermittel (38) umfasst, durch die das Produkt (2, 2', 2'') vor der Arbeitsstation (8) zum Laminieren läuft,
- die Puffermittel (38) so ausgebildet sind, dass sie die zu laminierende Schweiß- und Schneidzone (32) des Produktes (2, 2', 2'') von der Arbeitsstation (7) zum Schweißen und Schneiden in Richtung auf die Arbeitsstation (8) zum Laminieren durch Zug verschieben.

9. Vorrichtung (6) nach Anspruch 8, **dadurch gekennzeichnet, dass** das Produkt, (2, 2', 2'') die Puffermittel (38) mit einstellbarer Länge zickzack-förmig durchläuft.

10. Vorrichtung (6) nach Anspruch 8 oder 9, **dadurch gekennzeichnet, dass** die Puffermittel (38) umfassen :
- wenigstens eine zweite Umlenkstange (40a, 40b, 43) für das Produkt (2, 2', 2''), die vor der Arbeitsstation (8) zum Laminieren angeordnet ist und die sich in einer zweiten Längsrichtung (II-II) erstreckt, welche rechtwinklig zur Vorschubrichtung des Produktes (2, 2', 2'') verläuft,
- zweite Mittel zur Querverstellung der zweiten Umlenkstange (40a, 40b, 43) derart, dass die Länge des Abschnittes (2b) des Produktes (2, 2', 2'') vor der Arbeitsstation (8) zum Laminieren einstellbar ist.

11. Vorrichtung (6) nach Anspruch 3 oder 10, **dadurch gekennzeichnet, dass** die Verstellmittel die erste Umlenkstange (35) oder die zweite Umlenkstange (40a, 40b, 43) mit einer Translationsbewegung verstellen.

12. Vorrichtung (6) nach Anspruch 3 oder 10, **dadurch gekennzeichnet, dass** die Verstellmittel die erste Umlenkstange (35) oder die zweite Umlenkstange (40a, 40b, 43) mit einer Rotationsbewegung um eine seitlich verschobene Achse (E-E) verstellen, die parallel zur Längserstreckung (I-I, II-II) der ersten Umlenkstange (35) bzw. der zweiten Umlenkstange (40a, 40b, 43) verläuft.

13. Vorrichtung (6) nach einem der Ansprüche 1 bis 12, **dadurch gekennzeichnet, dass** die Arbeitsstation (7) zum Schweißen und Schneiden Mittel (7a) zum Trennschweißen hat.

14. Vorrichtung (6) nach Anspruch 13, **dadurch gekennzeichnet** :
- die Arbeitsstation (7) zum Schweißen und Schneiden ein Schweiß- und Schneid-Gegenelement (11) mit im wesentlichen ebener Arbeitsfläche (11a) hat, das sich in einer vierten Längsrichtung (IV-IV) erstreckt,
- die Trennschweißmittel (7a) eine Sonotrode (7b) mit zugespitzter Fläche (7c) haben.

15. Vorrichtung (6) nach einem der Ansprüche 1 bis 14, **dadurch gekennzeichnet, dass** :
- die Arbeitsstation (8) zum Laminieren ein Gegegenlaminierelement (12) hat, das sich in einer dritten Längsrichtung (III-III) erstreckt und eine im wesentlichen ebene Arbeitsfläche (12a) hat,
- die Laminiermittel (9) eine Sonotrode (13) mit im wesentlichen ebener Fläche (15) haben.

16. Vorrichtung (6) nach Anspruch 14 oder 15, **gekennzeichnet durch** Mittel (53) zur Verformung der Arbeitsseite (11a, 12a) des Gegenelementes zum Schweißen und Schneiden (11) und/oder des Gegenlaminierelementes (12) .

17. Vorrichtung (6) nach Anspruch 16, **dadurch gekennzeichnet, dass** :
- das Gegenelement (11) zum Schweißen und Schneiden und/oder das Gegenlaminierelement (12) einen T-förmigen Querschnitt hat, wobei die Arbeitsfläche (11a, 12a) auf der Außenfläche der oberen T-Schiene (54b) liegt,
- die Mittel zur Verformung (53) wenigstens eine Schraube (58a, 58b) haben, die zum Anschlag an die vertikale T-Schiene (54a) kommt, vorzugsweise zwei Schrauben (58a, 58b), von denen jede in der Nähe eines Endes des Gegenelementes (11a, 12a) liegt.

18. Vorrichtung (6) nach Anspruch 14 oder 15, **dadurch gekennzeichnet, dass** die Arbeitsstation (7) zum Schweißen und Schneiden und/oder die Arbeitsstation (8) zum Laminieren Druckmittel (30a, 30b, 34a, 34b) haben, die zur Anlage an dem entsprechenden Gegenelement (11, 12) mit dazwischen liegendem Produkt (2, 2', 2'') kommen.

19. Vorrichtung (6) nach Anspruch 18, **dadurch gekennzeichnet, dass** das Gegenelement oder die Gegenelemente (11, 12) in Richtung auf die entsprechenden Druckmittel (30a, 30b, 34a, 34b) verschiebbar sind, um die Anlagekraft zu erzeugen.

20. Maschine (1) zur Verarbeitung eines streifenförmigen oder bandförmigen Produktes (2, 2', 2''), **gekennzeichnet durch** eine Vorrichtung (6) zum Aneinanderfügen nach einem der Ansprüche 1 bis 19.

## Claims

1. Device (6) for butt-joining a product (2, 2', 2") in a strip or in a web of material, comprising:
- a heat-welding and cutting workstation (7) capable of heat-welding and cutting two thicknesses of product (2, 2', 2") along a heat-welding and cutting zone (32),
- a laminating workstation (8) with means (9) for laminating by heating the heat-welding and cutting zone (32) ,
between which said product (2, 2', 2") in a strip or in a web of material is designed to be moved according to a movement defined by means (22) for retaining the product (2, 2") upstream of the laminating workstation (8) and by a means for pulling the product (2, 2', 2") downstream of the laminating workstation (8),
**characterized in that**, in the heat-welding and cutting workstation and in the laminating workstation, the heating is carried out by ultrasound, and **in that** the device comprises means (16) for adjusting the relative position of the laminating means (9) and of the heat-welding and cutting zone (32) to be laminated, so that, after heat-welding and cutting and after movement of the heat-welding and cutting zone (32) to the laminating workstation (8), the heat-welding and cutting zone (32) to be laminated is placed in correspondence with the laminating means (9).

2. Device (6) according to claim 1, **characterized in that**:
- the adjustment means (16) comprise means for the relative movement of the laminating workstation (8) and heat-welding and cutting workstation (7),
- the adjustment means (16) comprise locking means suitable for fixing the laminating workstation (8) and the heat-welding and cutting workstation (7) at different distances (d) of relative separation.

3. Device (6) according to claim 1 or 2, **characterized in that**:
- the adjustment means (16) comprise a first product (2, 2") deflection bar (35), situated between the retention means (22) and the heat-welding and cutting workstation (7) and extending in a first direction of extension (I-I) perpendicular to the direction of travel of the product (2, 2"),
- the adjustment means (16) comprise first means for transverse movement of the first deflection bar (35), capable of moving the first deflection bar (35) so as to adjust the length of the upstream section (2a) of product (2, 2") extending from the retention means (22) to the heat-welding and cutting workstation (7).

4. Device (6) according to any one of claims 1 to 3, **characterized in that** it comprises means (22) for retaining the product (2, 2") upstream of the heat-welding and cutting workstation (7), which means are capable of immobilizing an upstream section (2a) of product (2, 2") extending from the retention means (22) to the heat-welding and cutting workstation (7) and preferably comprising:
- a third product (2, 2") deflection bar (23),
- pinching means (24) that can be moved selectively between a retention position in which the pinching means (24) press on the third product (2, 2") deflection bar (23) by means of the product (2, 2"), and a position of release in which the pinching means (24) are separated from the third deflection bar (23).

5. Device (6) according to any one of claims 1 to 4, **characterized in that**:
- the laminating workstation (8) comprises a laminating counterpart (12) extending in a third direction of extension (III-III), with a work face (12a) that is substantially flat,
- the laminating means (9) are secured to a support (50) that can be moved in the third direction of extension (III-III) opposite the laminating counterpart (12),
- the laminating means (9) are secured to bearing means (51) formed to press against the work face (12a) of the laminating counterpart (12),
- the laminating means (9) are secured to the support (50) by means of connecting means (52) formed to allow:
• a movement of translation in a direction (G-G) substantially perpendicular to the plane of the work face (12a),
• a rotary movement about a direction (H-H) substantially parallel to the third direction of extension (III-III) .

6. Device (6) according to claim 5, **characterized in that** the bearing means (51) are situated on either side of the laminating means (9) so as to press, by means of the product (2, 2', 2"), , against the work face (12a) of the laminating counterpart (12) on either side of the heat-welding and cutting zone (32) to be laminated, and preferably comprise rolling means (510) with two wheels (51a, 51b).

7. Device (6) according to any one of claims 1 to 6, **characterized in that** the heat-welding and cutting zone (32) of the product (2) is moved by pulling from the heat-welding and cutting workstation (7) to the laminating workstation (8) by means for advancing the product (2, 2', 2") of a subsequent workstation situated downstream of the laminating workstation (8).

8. Device (6) according to any one of claims 1 to 6, **characterized in that**:
- the device (6) comprises accumulation means (38) that the product (2, 2', 2") downstream of the laminating workstation (8) traverses,
- the accumulation means (38) are suitable for moving by pulling the heat-welding and cutting zone (32) to be laminated of the product (2, 2', 2") from the heat-welding and cutting workstation (7) to the laminating workstation (8).

9. Device (6) according to claim 8, **characterized in that** the product (2, 2', 2") traverses the accumulation means (38) on a zigzag path of which the length is adjustable.

10. Device (6) according to one of claims 8 or 9, **characterized in that** the accumulation means (38) comprise:
- at least one second product (2, 2', 2") deflection bar (40a, 40b, 43) situated downstream of the laminating workstation (8) and extending in a second direction of extension (II-II) perpendicular to the direction of travel of the product (2, 2', 2"),
- second transverse movement means of the second deflection bar (40a, 40b, 43) so as to adjust the length of the product (2, 2', 2") section (2b) situated downstream of the laminating workstation (8).

11. Device (6) according to one of claims 3 or 10, **characterized in that** the movement means move the first deflection bar (35) or the second deflection bar (40a, 40b, 43) in a movement of translation.

12. Device (6) according to one of claims 3 or 10, **characterized in that** the movement means move the first deflection bar (35) or the second deflection bar (40a, 40b, 43) in a rotary movement about an offset axis (E-E) parallel to the direction of extension (I-I, II-II) of said first deflection bar (35) or second deflection bar (40a, 40b, 43).

13. Device (6) according to any one of claims 1 to 12, **characterized in that** the heat-welding and cutting workstation (7) comprises heat-welding-cutting means (7a).

14. Device (6) according to claim 13, **characterized in that**:
- the heat-welding and cutting workstation (7) comprises a heat-welding and cutting counterpart (11) extending in a fourth direction of extension (IV-IV), with a substantially flat work face (11a),
- the heat-welding-cutting means (7a) comprise a sonotrode (7b) with a sharpened face (7c).

15. Device (6) according to any one of claims 1 to 14, **characterized in that**:
- the laminating workstation (8) comprises a laminating counterpart (12) extending in a third direction of extension (III-III), with a substantially flat work face (12a),
- the laminating means (9) comprise a sonotrode (13) with a substantially flat face (15).

16. Device (6) according to one of claims 14 or 15, **characterized in that** it comprises means (53) for deforming the work surface (11a, 12a) of the heat-welding and cutting counterpart (11) and/or of the laminating counterpart (12).

17. Device (6) according to claim 16, **characterized in that**:
- the heat-welding and cutting counterpart (11) and/or the laminating counterpart (12) comprises a T-shaped cross section, the work face (11a, 12a) being supported by the external face of the upper bar of the T (54b),
- the deformation means (53) comprise at least one screw (58a, 58b) designed to press against the vertical bar of the T (54a), preferably two screws (58a, 58b) each situated in the vicinity of one end of said counterpart (11a, 12a).

18. Device (6) according to one of claims 14 or 15, **characterized in that** the heat-welding and cutting workstation (7) and/or the laminating workstation (8) comprise pressing means (30a, 30b, 34a, 34b) designed to press against the corresponding counterpart (11, 12) by means of the product (2, 2', 2").

19. Device (6) according to claim 18, **characterized in that** the counterpart(s) (11, 12) can be moved toward the corresponding pressing means (30a, 30b, 34a, 34b) in order to cause said pressure.

20. Machine (1) for processing a product (2, 2', 2") in a strip or in a web of material, **characterized in that** it comprises a butt-joining device (6) according to any one of claims 1 to 19.
